# EUROPEAN PATENT SPECIFICATION

(11) **EP 4 391 472 B1**
(45) Date of publication and mention of the grant of the patent: **12.03.2025**
(21) Application number: 22215890.9
(22) Date of filing: 22.12.2022
(51) Int. Cl.: H04L 41/16, H04L 41/149, H04L 41/147, G06N 20/00, H04L 41/0873

(54) **METHOD FOR TRAINING A MACHINE LEARNING MODEL**
VERFAHREN ZUM TRAINIEREN EINES MASCHINENLERNMODELLS
PROCÉDÉ D'APPRENTISSAGE D'UN MODÈLE D'APPRENTISSAGE AUTOMATIQUE

(43) Date of publication of application: 26.06.2024
(73) Proprietor: NTT DOCOMO, INC., Tokyo 100-6150 (JP)
(72) Inventor: BAKHSHI, Bahador, 80687 Munich (DE); SAMA, Malla Reddy, 80687 Munich (DE); MINOKUCHI, Atsushi, Tokyo, 100-6150 (JP)
(74) Representative: Viering, Jentschura & Partner mbB Patent- und Rechtsanwälte

(56) References cited:
- CN-A- 113 989 627
- US-A1- 2022 052 925

## Description

The present disclosure relates to methods for training a machine learning model.

In a communication network such as a 5G mobile communication network it is important to ensure that a certain service quality can be maintained. For this, network statistical analysis and prediction information which may be generated from information like load, resource usage, available components, state of components etc. may be monitored to be able to take measures, e.g. when overload is imminent, to avoid a drop of service quality, etc. Prediction information may be provided using a machine learning model trained for this purpose. Accordingly, efficiently training a machine learning model in a communication system context, in particular for providing network analytics (including predictions) are desirable. Document CN 113 989 627 A represents a relevant piece of prior art.

According to one embodiment, a method for training a machine learning model is provided according to claim 1.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a mobile radio communication system.
- Figure 2: shows an NWDAF AnLF (Analytics Logical Function) and an NWDAF MTLF (Model Training Logical Function).
- Figure 3: shows a flow diagram illustrating a flow for an NWDAF service consumer to obtain analytics information from an NWDAF(AnLF).
- Figure 4: shows a flow diagram illustrating federated learning (FL) in a 5G system.
- Figure 5: illustrates an approach to address data heterogeneity in federated learning according to an embodiment.
- Figure 6: shows a flow diagram illustrating an initialization and data gathering phase of federated learning according to an embodiment.
- Figure 7: shows a flow diagram illustrating a training phase of federated learning according to an embodiment.
- Figure 8: illustrates an implementation of federated learning according to an embodiment.
- Figure 9: illustrates an implementation of federated learning according to a further embodiment.
- Figure 10: illustrates an implementation of federated learning according to a further embodiment.
- Figure 11: illustrates a variant of the approach to address data heterogeneity in federated learning of figure 5 according to an embodiment.
- Figure 12: shows a flow diagram illustrating a method for training a machine learning model according to an embodiment.
- Figure 13: shows a data processing system according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

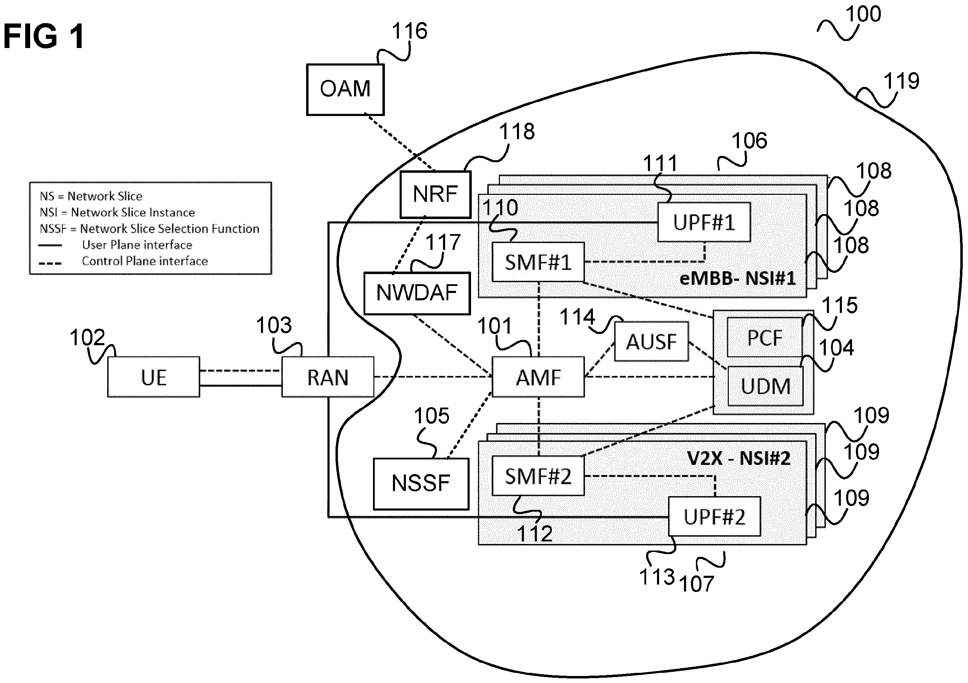

Figure 1 shows a mobile radio communication system 100, for example configured according to 5G (Fifth Generation) as specified by 3GPP (Third Generation Partnership Project).

The mobile radio communication system 100 includes a mobile radio terminal device 102 such as a UE (user equipment), a nano equipment (NE), and the like. The mobile radio terminal device 102, also referred to as subscriber terminal, forms the terminal side while the other components of the mobile radio communication system 100 described in the following are part of the mobile communication network side, i.e. part of a mobile communication network (e.g. a Public Land Mobile Network PLMN).

Furthermore, the mobile radio communication system 100 includes a Radio Access Network (RAN) 103, which may include a plurality of radio access network nodes, i.e. base stations configured to provide radio access in accordance with a 5G (Fifth Generation) radio access technology (5G New Radio). It should be noted that the mobile radio communication system 100 may also be configured in accordance with LTE (Long Term Evolution) or another mobile radio communication standard (e.g. non-3GPP accesses like WiFi) but 5G is herein used as an example. Each radio access network node may provide a radio communication with the mobile radio terminal device 102 over an air interface. It should be noted that the radio access network 103 may include any number of radio access network nodes.

The mobile radio communication system 100 further includes a core network (5GC) 119 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network 119 further includes an AUSF (Authentication Server Function) 114 and a PCF (Policy Control Function) 115.

The core network 119 may have multiple core network slices 106, 107 and for each core network slice 106, 107, the operator (also referred to MNO for Mobile Network Operator) may create multiple core network slice instances 108, 109. For example, the core network 119 includes a first core network slice 106 with three core network slice instances (CNIs) 108 for providing Enhanced Mobile Broadband (eMBB) and a second core network slice 107 with three core network slice instances (CNIs) 109 for providing Vehicle-to-Everything (V2X).

Typically, when a core network slice is deployed (i.e. created), network functions (NFs) are instantiated, or (if already instantiated) referenced to form a core network slice instance and network functions that belong to a core network slice instance are configured with a core network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113. The SMFs 110, 112 are for handling PDU (Protocol Data Unit) sessions, i.e. for creating, updating and removing PDU sessions and managing session context with the User Plane Function (UPF).

The RAN 103 and the core network 119 form the network side of the mobile radio communication system, or, in other words, form the mobile radio communication network. The mobile radio communication network and the mobile terminals accessing the mobile radio communication network form, together, the mobile radio communication system.

The mobile radio communication system 100 may further include an OAM (Operation, Administration and Maintenance) function (or entity) 116, e.g. implemented by one or more OAM servers which is connected to the RAN 103 and the core network 119 (connections are not shown for simplicity). The OAM 116 may include an MDAS (Management Data Analytics Service). The MDAS may for example provide an analytics report regarding network slice instance load. Various factors may impact the network slice instance load, e.g. number of UEs accessing the network, number of QoS flows, the resource utilizations of different NFs which are related with the network slice instance.

Further, the core network 118 comprises an NRF (Network Repository Function).

The core network 119 may further include a Network Data Analytics Function (NWDAF) 117. The NWDAF is responsible for providing network analysis and/or prediction information upon request from network functions. For example, a network function may request specific analysis information on the load level of a particular network slice instance. Alternatively, the network function can use the subscribe service to ensure that it is notified by the NWDAF if the load level of a network slice instance changes or reaches a specific threshold. The NWDAF 117 may have an interface to various network functions on the mobile communication network side, e.g. to the AMF 101, the SMFs 110, 112 and the PCF 115. For simplicity, only the interface between the NWDAF 117 and the AMF 101 is depicted.

For example, NWDAF analytics should allow monitoring the number of UEs registered in a network slice instance and their Observed Service Experience. In addition to OAM performing SLA (service level agreement) assurance, 5GC NFs may take actions based on NWDAF slice QoE analytics to prevent further service experience degradation in the network slice instance.

The NSSF 105 or AMF 101 may for example determine when a load distribution decision is required to address an issue identified by processing the analytics result (i.e. network analysis and/or prediction information) provided by the NWDAF 117. For example, when a network slice instance is detected or forecast to experience service experience degradation, new UE registrations or PDU sessions may not be assigned to that network slice instance anymore by triggering a network slice load distribution mechanism. The NSSF 105, AMF 101 and/or OAM 116, for example, may also simultaneously subscribe to both slice service experience and slice load analytics from the NWDAF 117. One or multiple subscriptions to one or multiple S-NSSAI(s) and NSI(s) are possible.

To generate the network analysis and/or prediction information, NWDAF 117 collects input data required (e.g. to derive slice service experience analytics), i.e. information for analysis of the state of the network slice instance. The NWDAF 117 may obtain such kind of information by subscribing to network functions to be informed accordingly.

According to 3GPP Release 17 (Rel-17) the NWDAF 117 is decomposed into two functions.

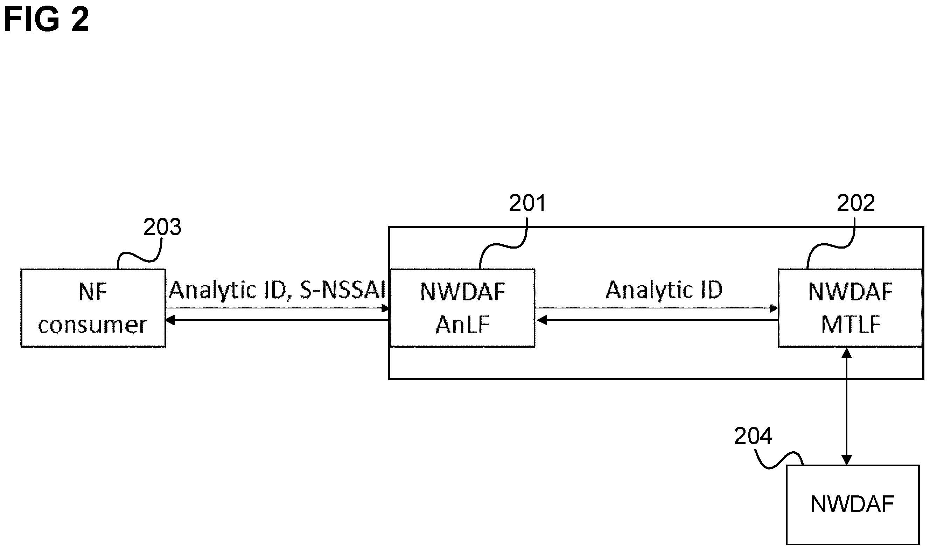

Figure 2 shows an NWDAF AnLF (Analytics Logical Function) 201 and an NWDAF MTLF (Model Training Logical Function) 202, e.g. connected via an Nnwdaf interface.

An NWDAF 201 containing the Analytics logical function is denoted as NWDAF(AnLF) or NWDAF-AnLF or simply AnLF and can perform inference, derive analytics information and expose analytics service i.e. Nnwdaf_AnalyticsSubscription or Nnwdaf_AnalyticsInfo.

An NWDAF 202 containing the Model Training logical function is denoted as NWDAF(MTLF) or NWDAF-MTLF or simply MTLF, trains machine learning (ML) models and exposes new training services (e.g. providing trained model).

The NWDAF(AnLF) 201 provides an analytics service. It may be contacted by any NF (acting as service consumer) 203 (e.g. an AMF or SMF) to be provided with analytics information (e.g. via an Nnf interface).

Input request parameters to the NWDAF(AnLF) 201 by the NF 203 are, e.g. an Analytic ID and an S-NSSAI. The output from the NWDAF(AnLF) 201 are for example statistics and/or prediction (referred to as network analytics information herein) for an Analytic ID.

Examples of Analytics IDs are UE communication, UE mobility, UE behaviour, User data congestion and Network performance, etc.

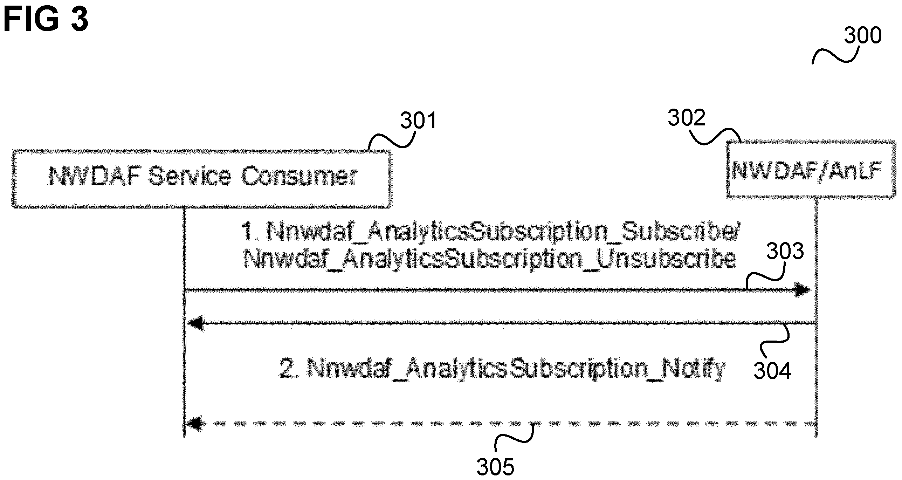

Figure 3 shows a flow diagram 300 illustrating a flow for an NWDAF service consumer 301 (e.g. corresponding to the NF 303) to obtain analytics information from an NWDAF(AnLF) 302 (e.g. corresponding to NWDAF(AnLF) 201).

In 303, the NWDAF service consumer 301 subscribes to the analytics service (it may later similarly unsubscribe). The NWDAF(AnLF) 302 acknowledges in 304.

In response to the subscription, the NWDAF(AnLF) 302 sends analytics information to the NWDAF service consumer 301 using one or more notification messages in 305.

Analytics information, such as the analytics information provided by the NWDAF(AnLF) 201 may be determined using a machine learning model, which may for example be trained to predict need for communication resources. Such a machine learning model may be trained using federated learning.

Federated learning (FL) is a decentralized machine learning (ML) technique that trains a ML model across multiple (FL) clients using local training dataset under the control of a central server (denoted as FL server).

It typically includes multiple training iterations, wherein in each training iteration,
- the FL server chooses a number of client to participate in this iteration of the FL training
- the FL server transmits a current version of the model to the clients (starting in the first iteration with an initial version of the model)
- each FL client (also denoted as FL node) trains the model locally (i.e. updates the current version of the model, e.g. updates weights of a neural network). Each FL client uses its own training data (also denoted as local training data).
- the FL server pools the training results from the clients and generates a new version of the global model via aggregating them

The resulting version (i.e. new version of the last iteration) may then be used by a model consumer such as the NWDAF(AnLF) 201 which may use it to make predictions from data obtained from an environment (such as communication resource need).

In a 5G communication system, federated learning may for example be realized inside the 5GC for providing NWDAF analytics where an NWDAF(MTLF) is a FL server, some NWDAF(MTLF)s are the FL clients and an NWDAF(AnLF) is the consumer of the trained ML model (as in the example above) but also on top of the 5GC, in application layer, for verticals where an application in an application function (AF) is the FL server and applications in UEs are the FL clients.

Live data in the communication network may be used by the FL clients for training a machine learning (ML) model.

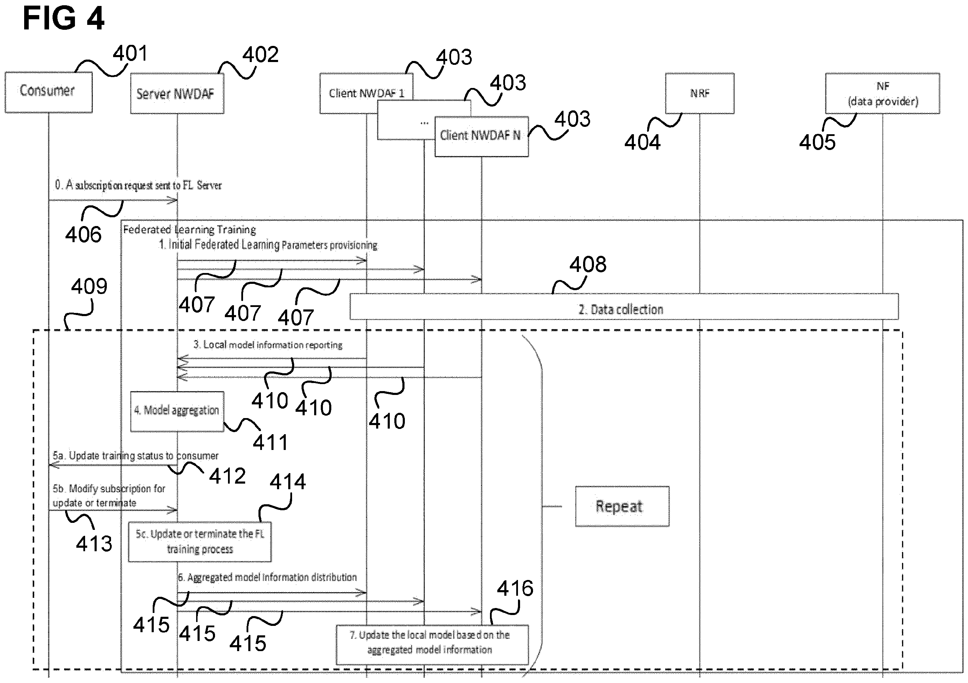

Figure 4 shows a flow diagram 400 illustrating federated learning in a 5G system where, for example, the FL server is a first NWDAF 402 and the clients are second NWDAFs 403.

In 406, a service consumer 401 (e.g. an NWDAF(AnLF)) initiates training of the ML model by sending a subscription request to the FL server 402.

In 407, the FL server 402 provides FL parameters to the FL clients 403 (such as parameters allowing the clients 403 to know what kind of training data they need and an initial version of the model).

In 408, each FL client 403 gathers training data, e.g. from an NRF 404 or any kind of NF 405 providing relevant data.

Then, multiple iterations 409 are performed. Each iteration includes
- that each client 403 performs local training (e.g. determines a model update to a respective "local" model, which each FL client 403 sets, in the first iteration, to the initial version of the model) and reports an update of the model to the FL server 402 in 410
- the FL server 402 aggregates the model updates in 411
- the FL server 402 may inform the service consumer 401 about the training status in 412
- the service consumer 401 may give instructions like that the training should be terminated or continued in 413
- the FL server 402 decides whether to continue or terminate the FL training service (e.g. according to the client command or another criterion such as whether a desired accuracy has been achieved) in 414
- (if training should be continued) the FL server 402 distributes a specification of the aggregated model (also referred to as "global" model) to the FL clients 403 in 415
- Each FL clients 403 sets its local model to the global model (to be used as a basis for the training in the next iteration)

An important assumption for FL is that all the clients are training the same model using similar data. For example, in speech recognition all the clients are training a model for the English language or in UE mobility analytics all MTLFs are training a model for the UEs in an urban area. Accordingly, training performance suffers in case of data heterogeneity, i.e. if a local training dataset of a FL client is quite different from the local training data of other clients. For example, e.g., in speech recognition a client may be getting data from German speaking people as local training data or, in UE mobility analytics an MTLF may be getting data for UEs in a rural area (instead of urban area) as local training data. This typically leads to a decrease of the accuracy of the global model due to the detrimental updates from such a client (having "ill-fitting" local training data". Data heterogeneity may for example occur due to temporal difference between clients' local data sets, geographical difference between clients, faulty behaviour, malware, data poisoning attacks, etc.

It should be noted that it may even be the FL server which has such as king of "ill-fitting" data which it uses as test data and so the FL server may not be able to properly judge whether a client has ill-fitting data (i.e. has provided a detrimental update) by testing. Furthermore, determining whether a client has ill-fitting local training data based on the accuracy of the client's local model in comparison to the other client's models may not properly work since, because of the partially trained model during the training, the difference between accuracies of local models can be high even if there are small difference in the local training data between clients.

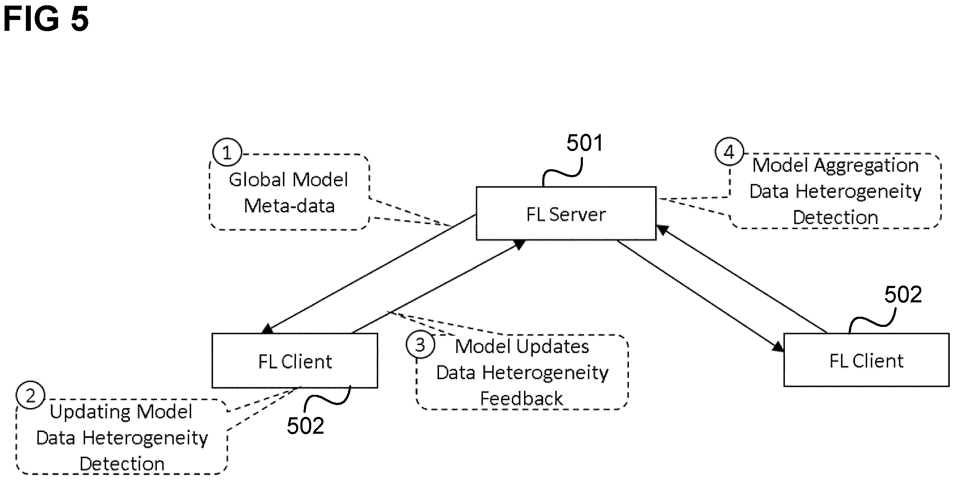

Figure 5 illustrates an approach to address data heterogeneity in federated learning according to an embodiment.

According to the approach illustrated in figure 5,
1) In addition to the specification of the current global model, the FL server 501 sends meta-data to the FL clients 502 (which, according to various embodiments, includes statistical information about test data of FL server 501, denoted as G-data statistics and/or an accuracy of the global model on these ("global") test data of the FL server 501, denoted as G-accuracy)
2) In addition to updating the model, each FL client 502 attempts to detect data heterogeneity
3) In addition to sending model updates, each FL client 502 provides feedback on data heterogeneity to the FL server 501.
4) In addition to model aggregation, the FL server 501 processes FL client feedbacks on data heterogeneity

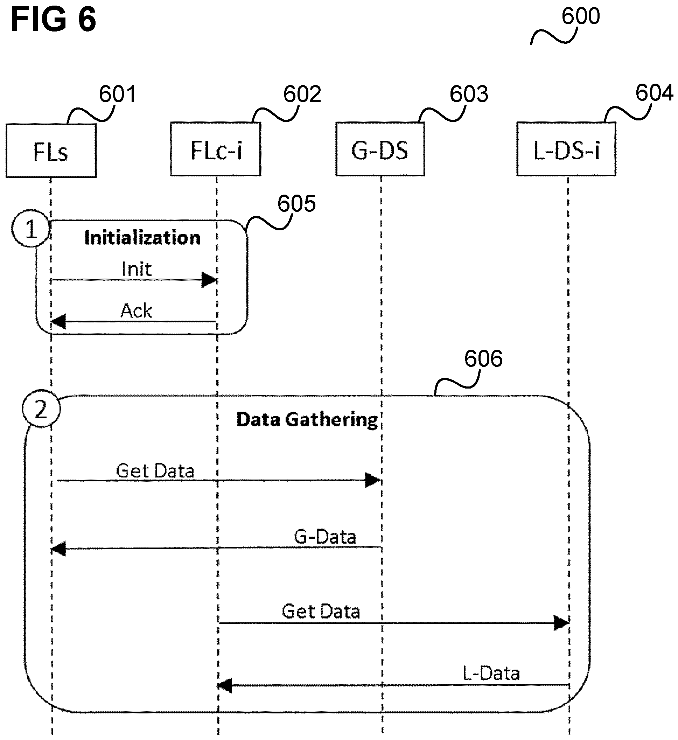

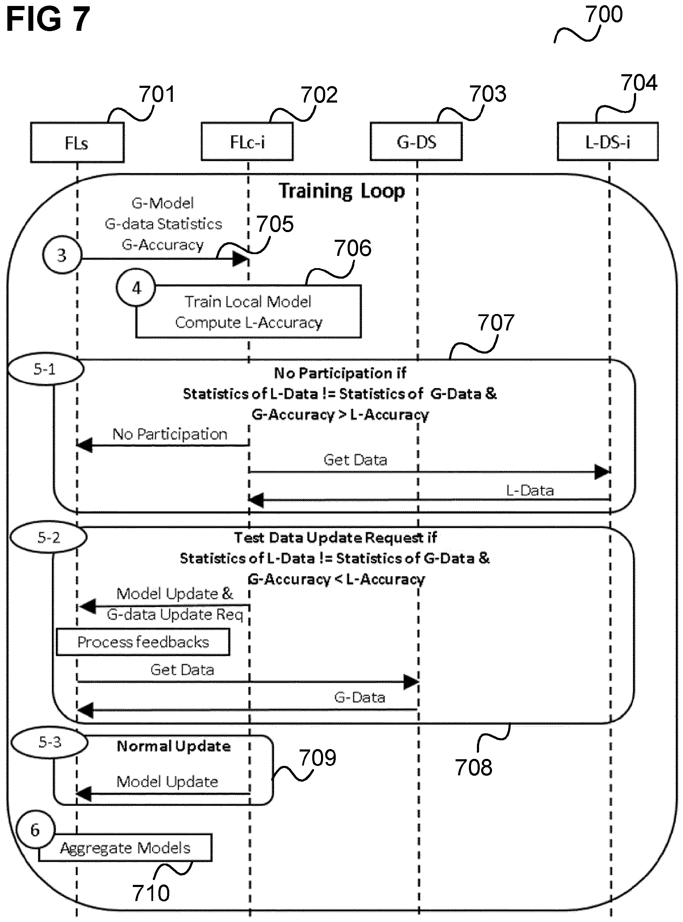

In the following, a detailed example of the approach of figure 5 is described with reference to figures 6 and 7.

Figure 6 shows a flow diagram 600 illustrating an initialization and data gathering phase of federated learning according to an embodiment.

The flow takes place between an FL server 601, FL clients, wherein only the ith FL client 602 is depicted and considered in the following, a global data store 603 that contains the global test data (i.e., an ADRF (Analytical Data Repository Function) which contains data of the respective communication system) and a local data store of each FL client, wherein only the local data store 604 of the ith-FL client 602 is depicted and considered in the following.

The operations performed for (or by) the ith FL client 602 and the local data store 604 of the ith-FL client 602 may be performed for (or by) each of multiple FL clients.

In an initialization step 605, the FL server 601 initializes the FL client 602 (e.g. by an initialization message from the FL sever 601 acknowledged by an acknowledgement message by the FL client 602)

In a data gathering step 606, the FL server 601 gets the global test data from the global data store 603 and the client 602 gets the local training data from the local data store 604 (by corresponding request and response messages).

Figure 7 shows a flow diagram 700 illustrating a training phase of federated learning according to an embodiment.

Similarly to the flow of figure 6, which may be followed by the flow of figure 7, the flow of figure 7 takes place between an FL server 701, FL clients, wherein only the ith FL client 702 is depicted and considered in the following, a global data store 703 that contains the global test data and a local data store of each FL client, wherein only the local data store 704 of the ith-FL client 702 is depicted and considered in the following.

The following abbreviations are used in the following:
- G-Model: the global model (i.e. the current model version of the FL server)
- L-Model: the local model of the FL client
- G-Data: global test data (i.e. the test data of the FL server)
- L-Data: local training data
- G-Data statistics: statistical information about the global test data
- L-Data statistics: statistical information about the local training data
- G-Accuracy: the accuracy of the G-Model on the G-Data
- L-Accuracy: the accuracy of the L-Model on local test data (i.e. test data of the FL client)

Again, as in the flow of figure 6, the operations performed for (or by) the ith FL client 702 and the local data store 704 of the ith-FL client 702 may be performed for (or by) each of multiple FL clients.

In 705, the FL server 701 sends, in addition to the G-Model,
- The statistics of the G-Data and
- The accuracy of the G-Model on G-Data
to the FL client 702.

In 706, the FL Client 702 trains the local model using L-Data and computes the accuracy of the local model on the local test data.

Now, the FL client 702 compares statistics of its local training data with statistics of the global data and the L-Accuracy with the G-Accuracy and one of the following is performed
- If the FL client 702 detects that local training data and global test data are statistically different and detects that updating the model decreases the accuracy (i.e. that L-Accuracy < G-Accuracy) the client 702, in 707, does not participate in the training (by informing the FL server 701 accordingly) and obtains a new set of local training data from its local data store 704
- If the FL client 702 detects that local training data and global test data are statistically different but detects that updating the model increases the accuracy (i.e. that L-Accuracy > G-Accuracy)) it concludes that its local training data is similar to the local training data of other clients and, in 708, request the FL server 701 to update its global test data. The FL server 701 may subsequently update the global test data accordingly
- If the FL client 702 detects that local training data and global test data are not statistically different, it, in 709, sends a model update to the FL server 701

In 710 the FL server 701 aggregates the local models, i.e. determines a new version of the global model according to the received updates (if any).

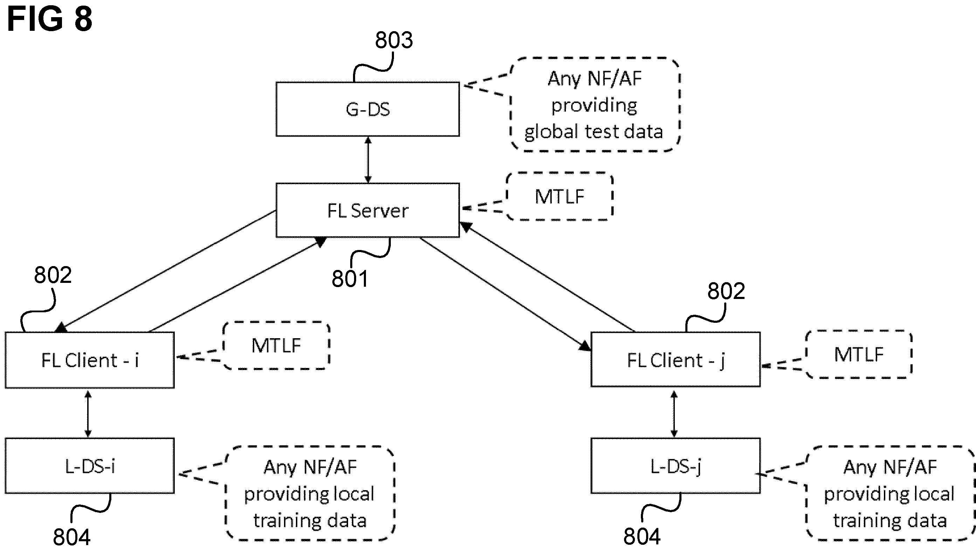

Figure 8 illustrates an implementation where the FL server 801 is implemented by an MTLF, the global data store 803 is implemented by any NF or AF providing global test data, the FL clients 802 are implemented by MTLFs and the local data stores 804 are implemented by any NF or AF providing local training data and local test data.

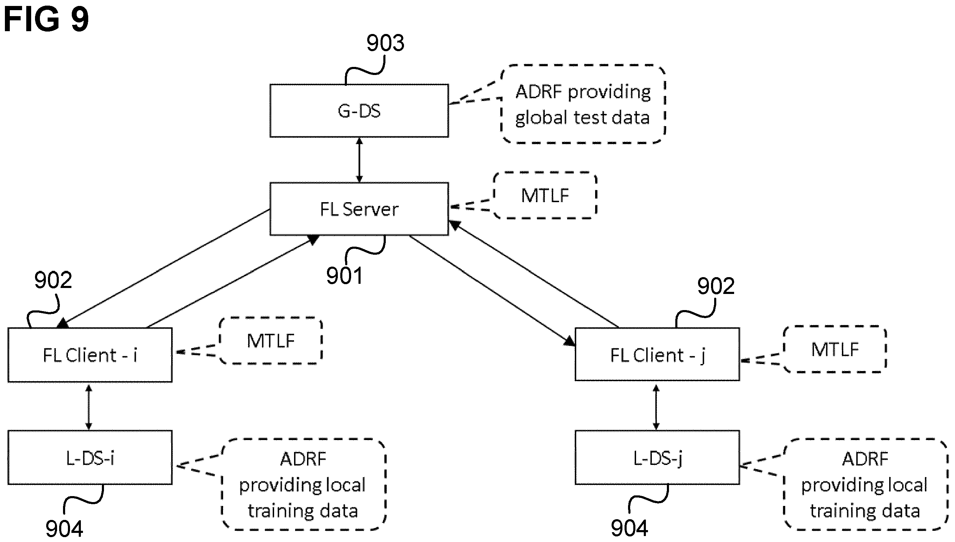

Figure 9 illustrates an implementation where the FL server 901 is implemented by an MTLF, the global data store 903 is implemented by an ADRF providing global test data, the FL clients 802 are implemented by MTLFs and the local data stores 804 are implemented by ADRFs providing local training data and local test data.

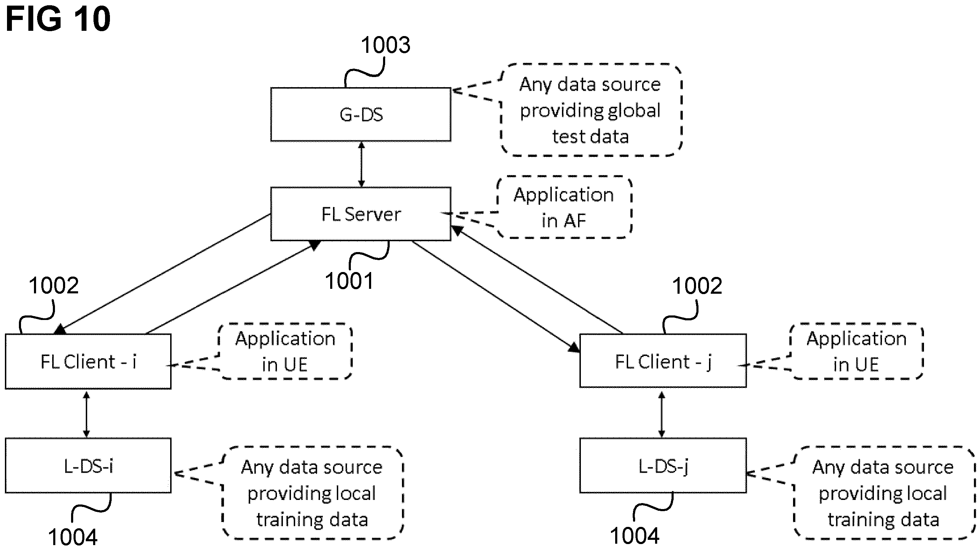

Figure 10 illustrates an implementation where the FL server 1001 is implemented by an application in an AF, the global data store 1003 is implemented by any data source providing global test data, each FL client 1002 is implemented by an applications running on a respective UE and the local data stores 1004 are implemented by any data source providing local training data and local test data.

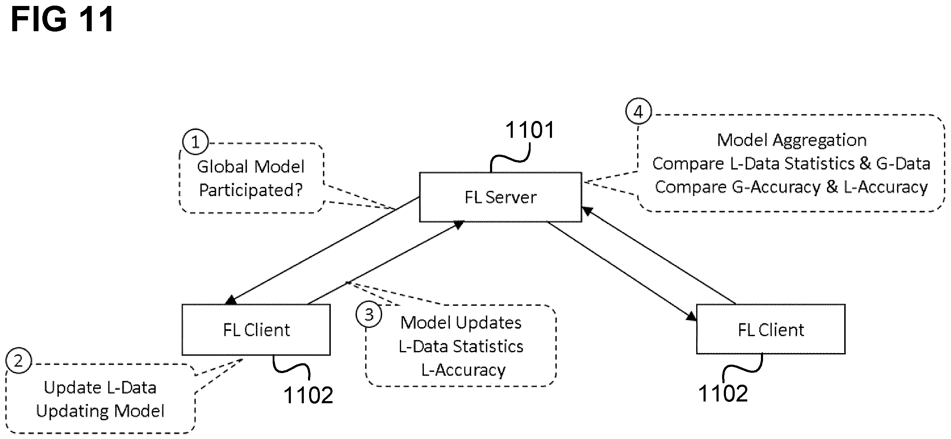

Figure 11 illustrates a variant of the approach to address data heterogeneity in federated learning of figure 5 according to an embodiment.

The approach of figure 11 differs from the approach of figure 5 in that the data heterogeneity detection is performed by the FL server 1101 rather than by the FL clients 1102.

For this, each FL client 1102 sends, in addition to the model update it has determined, an indication of the L-Data statistics and the L-Accuracy to the FL server 1101.

The FL server 1101 may then in particular determine for each FL client 1102 whether it should participate in the training or not (analogously to 707 of figure 5) and may inform the FL client 1102 accordingly.

So, the data heterogeneity detection logic may be in the FL clients 502, 1102, in the FL server 501, 1101 or even both.

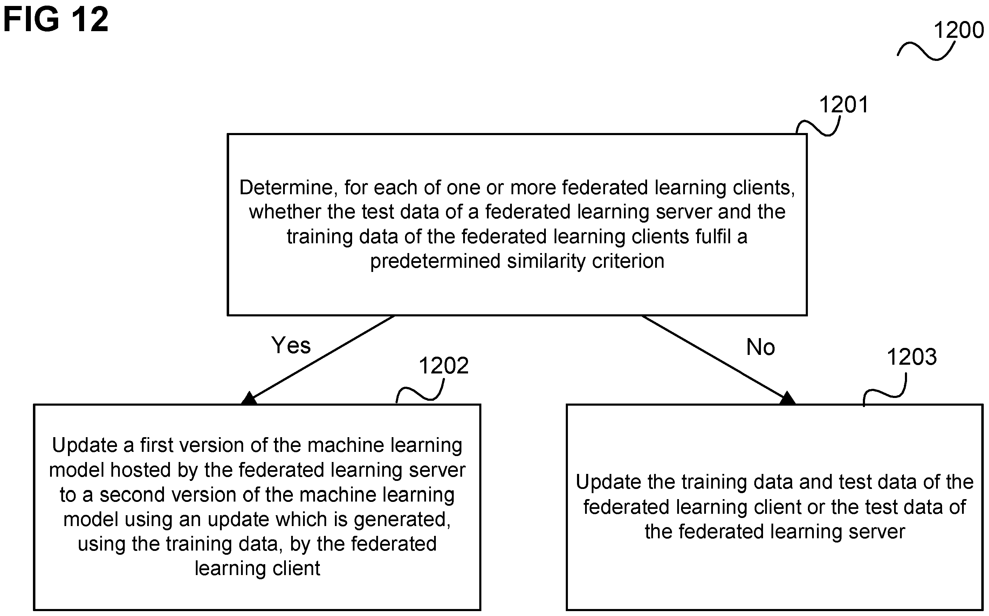

In summary, according to various embodiments, a method is provided as illustrated in figure 12.

Figure 12 shows a flow diagram 1200 illustrating a method for training a machine learning model.

In 1201, for each of one or more federated learning clients, it is determined whether the test data of a federated learning server and the data of the federated learning clients fulfil a predetermined similarity criterion.

In 1202, for each of the one or more clients, if the test data of the federated learning server and the training data of the federated learning client fulfil a predetermined similarity criterion, updating a first version of the machine learning model running on the federated learning server to a second version of the machine learning model using an update which is generated, using the training data, by the federated learning client.

In 1203, if the test data of the federated learning server and the training data of the federated learning client fulfil do not fulfil the predetermined similarity criterion, for example, the training data (and the associated test data) of the federated learning client or the test data of the federated learning server is updated depending on whether the accuracy of an updated version of the machine learning model (according to the update generated by the federated client) on test data of the federated learning client is higher than the accuracy of the first version of the machine learning model on the test data of the federated learning server or not.

According to various embodiments, in other words, a model is updated using an update from an FL client in case the test data used by the FL server and the training data used by the FL client are sufficiently similar, e.g. in case statistics of test data used by the FL server matches statistics of training data used by the FL client. Depending on whether the FL server or the FL client performs the checking (i.e. whether the the similarity criterion is fulfilled), there is a corresponding feedback mechanism between the FL client and the FL server, e.g. a notification that the update determined by the FL client is not used (or is not to be used) for updating the model running on the FL server. Further, information for performing the checking (and possibly further checks like the accuracy check described above) is exchanged between the FL client(s) and the FL server. In particular, according to various embodiments, as described above, G-Accuracy, G-Data Statistics and the information that an FL client does not participate are communicated. Further, training and/or test data may be updated (or refreshed), in particular depending on the result of the checking.

It should be noted that updating the first version of the machine learning model to the second version of the machine learning model, may, from the point of view of the federated learning client, mean that the federated learning client transmits the update it has generated to the federated learning server. From the point of view of the federated learning server, updating the first version of the machine learning model to the second version of the machine learning model may include the aggregation of the updates generated by the federated learning clients.

The test data of the federated learning server and the training data of the federated learning client may for example fulfil the predetermined similarity criterion if and only if their statistics fulfil a predetermined similarity criterion (with regard to statistics).

It should further be noted that a new "version" (and its alternative synonyms like "release") of the machine learning model to which an existing machine learning model is updated corresponds to a new modified model obtained via local updates by one or more federated learning clients, aggregation by federated learning server or any alternation of the existing model, i.e. an update includes a modification of parameters such as (neural network) weights.

The similarity between the training data set of the one or more FL clients and the test data set of the FL server may be measured without sharing the actual data sets among the federated learning server and the one or more FL clients; rather it may be accomplished via sending some characteristics of test data, like statistics, distribution, data sparsity or other data similarity measures, from the federated learning server to each of the one or more federated learning clients or sending some characteristics of training data, like statistics, distribution, data sparsity, or other data similarity measures, from federated learning client to the federated learning server.

As in the examples described above, multiple iterations of the process described with reference to figure 12 may be performed to train the machine learning model.

The approach of figure 12 allows achieving a high accuracy of the trained model such that, in particular, the trained model works well in practical application.

ML models trained by FL according to the approach of figure 12 may be used for decision making in various contexts, e.g. an PCF, UPF, SMF, AMF, and other NFs and also AFs can use NWDAF Analytics provided by such a model for resource planning.

Inaccuracy of an ML model leads to wrong predictions, thus to wrong decisions and eventually to performance loss. For example, an inaccurate model for estimating UE mobility leads to a wrong prediction of the number of UEs thus to wrong resource planning and eventually UE performance degradation. Since the approach of figure 12 allows improving accuracy models trained by FL, more ore accurate prediction, thus better decision making and thus improved performance are achieved.

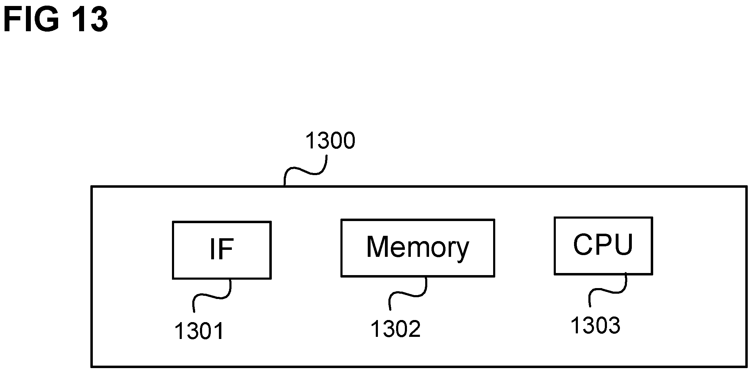

The method of figure 12 is for example carried out by a data processing system as illustrated in figure 13.

Figure 13 shows a data processing system according to an embodiment.

The data processing system comprises one or more data processing devices 1300 (e.g. mobile terminals (UE) and/or server computers), each comprising a communication interface 1301 (e.g. for FL client - FL server communication), a memory 1302 (e.g. for storing a local model, global model or model update and program code) and a processing unit 1303 (e.g. a CPU) for carrying out the various functions of the method.

The components of the a data processing device are implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the scope as defined by the appended claims.

## Claims

1. A method (700, 1200) for training a machine learning model **characterised by** comprising: Determining (1201), for each of one or more federated learning clients (502, 602, 702, 1102), whether a training data of the respective federated learning client fulfils a predetermined similarity criterion to a test data of a federated learning server (501, 601, 701, 1101), and for each of the federated learning clients, if (1202)the training data of the respective federated learning client fulfils the predetermined similarity criterion, updating a first version of the machine learning model running on the federated learning server to a second version of the machine learning model using an update which is generated, using the training data of the respective federated learning client, by the respective federated learning client.

2. The method of claim 1, comprising generating, by the federated learning server (501, 601, 701, 1101), the second version of the machine learning model by aggregating the updates of each of the one or more federated learning clients (502, 602, 702, 1102) for which the test data of the federated learning server and the training data of the federated learning client fulfil the predetermined similarity criterion.

3. The method of claim 1 or 2, comprising, for each of the one or more federated learning clients (502, 602, 702, 1102),
Transmitting information about characteristics of the training data of the federated learning client to the federated learning server (501, 601, 701, 1101) and determining, by the federated learning server, whether the training data of the federated learning client fulfils the predetermined similarity criterion or
Transmitting (705) information about characteristics of the test data of the federated learning server to the federated learning client and determining, by the federated learning client, whether the training data of the federated learning client fulfils the predetermined similarity criterion.

4. The method of any one of claims 1 to 3, wherein, for each of the one or more federated learning clients (502, 602, 702, 1102), the predetermined similarity criterion is that each of one or more characteristics of the test data of the federated learning server (501, 601, 701, 1101) lie within a respective predetermined range of corresponding characteristics of the training data of the federated learning client.

5. The method of claim 4, wherein the test data of the federated learning server (501, 601, 701, 1101) and the training data of the federated learning client (502, 602, 702, 1102) each comprise a plurality of data elements, each data element having a value for each of a plurality of components and the one or more characteristics of the test data of the federated learning server include a mean, quantile and/or a variance for each of at least some of the components of the data elements of the test data and the one or more characteristics of the training data include a mean, quantile and/or a variance for each of the at least some of the components of the data elements of the training data.

6. The method of any one of claims 1 to 5, comprising transmitting the machine learning model from the federated learning server (501, 601, 701, 1101) to the one or more federated learning clients (502, 602, 702, 1102) and, at least if the training data of the federated learning client fulfils the predetermined similarity criterion, determining, by each of the one or more federated learning clients, the update.

7. The method of claim 6, comprising determining (706), for each of the one or more federated learning clients (502, 602, 702, 1102), an updated version of the machine learning model according to the update determined by the federated learning client, comparing an accuracy of the updated version of the machine learning model on test data of the federated learning client with an accuracy of the first version of the machine learning model on test data of the federated learning server (501, 601, 701, 1101) and if the accuracy of the updated version of the machine learning model on the test data of the federated learning client is higher than the accuracy of the first version of the machine learning model on test data of the federated learning server, updating the first version of the machine learning model to the second version of the machine learning model using the update by the federated learning client.

8. The method of claim 7, comprising, for each federated learning client (502, 602, 702, 1102), transmitting an indication of the accuracy of the updated version of the machine learning model on the test data of the federated learning client to the federated learning server (501, 601, 701, 1101) and comparing, by the federated learning server, the accuracy of the updated version of the machine learning model on the test data of the federated learning client with the accuracy of the first version of the machine learning model on test data of the federated learning server or
transmitting an indication of the accuracy of the first version of the machine learning model on the test data of the federated learning server to the federated learning client and comparing, by the federated learning client, the accuracy of the updated version of the machine learning model on the test data of the federated learning client with the accuracy of the first version of the machine learning model on test data of the federated learning server.

9. The method of any one of claims 7 to 8, comprising, for each of the plurality of clients (502, 602, 702, 1102), if (708) the accuracy of the updated version of the machine learning model on the test data of the federated learning client is higher than the accuracy of the first version of the machine learning model on test data of the federated learning server (501, 601, 701, 1101) but the training data of the federated learning client does not fulfil the predetermined similarity criterion, triggering (1203) an update of the test data of the federated learning server.

10. The method of any one of claims 7 to 9, comprising, for each of the plurality of clients(502, 602, 702, 1102), if (707) the training data of the federated learning client does not fulfil the predetermined similarity criterion and the accuracy of the updated version of the machine learning model on the test data of the federated learning client is not higher than the accuracy of the first version of the machine learning model on test data of the federated learning server (501, 601, 701, 1101), avoiding using the update generated by the federated learning client for updating the first version of the machine learning model.

11. The method of any one of claims 7 to 10, comprising, for each of the one or more clients, if (707) the training data of the federated learning client does not fulfil the predetermined similarity criterion and the accuracy of the updated version of the machine learning model on the test data of the federated learning client is not higher than the accuracy of the first version of the machine learning model on test data of the federated learning server, triggering (1203) an update of the training data of the federated learning client.

12. The method of any one of claims 1 to 11, comprising implementing the one or more federated learning clients by one or more mobile terminals of a mobile radio communication system or implementing both the federated learning server and the one or more federated learning clients by core network functions of the mobile radio communication system.

13. The method of any one of claims 1 to 12, wherein each of the one or more federated learning clients generates the update by training the machine learning model on the training data of the federated learning client to perform a communication network analytics task.

14. The method of claim 13, wherein the communication network analytics task is a prediction of a need of communication resources.

15. A data processing system, configured to perform the method of any one of claims 1 to 14.

## Patentansprüche

1. Ein Verfahren (700, 1200) zum Trainieren eines maschinellen Lernmodells, dadurch charakterisiert, dass es aufweist:
Bestimmen (1201), für jeden von einem oder mehreren Föderiertes-Lernen-Clients (502, 602, 702, 1102), ob Trainingsdaten des jeweiligen Föderiertes-Lernen-Clients ein vorbestimmtes Ähnlichkeitskriterium mit Testdaten eines Föderiertes-Lernen-Servers (501, 601, 701, 1101) erfüllen, und
für jeden der Föderiertes-Lernen-Clients, wenn (1202) die Trainingsdaten des jeweiligen Föderiertes-Lernen-Clients das vorbestimmte Ähnlichkeitskriterium erfüllen, Aktualisieren einer ersten Version des maschinellen Lernmodells, das auf dem Föderiertes-Lernen-Server läuft, auf eine zweite Version des maschinellen Lernmodells unter Verwendung einer Aktualisierung, die unter Verwendung der Trainingsdaten des jeweiligen Föderiertes-Lernen-Clients durch den Föderiertes-Lernen-Client erzeugt wird.

2. Das Verfahren nach Anspruch 1, aufweisend das Erzeugen der zweiten Version des maschinellen Lernmodells durch den Föderiertes-Lernen-Server (501, 601, 701, 1101) durch Aggregieren der Aktualisierungen jedes der einen oder mehreren Föderiertes-Lernen-Clients (502, 602, 702, 1102), für die die Testdaten des Föderiertes-Lernen-Servers und die Trainingsdaten des Föderiertes-Lernen-Clients das vorbestimmte Ähnlichkeitskriterium erfüllen.

3. Das Verfahren nach Anspruch 1 oder 2, aufweisend für jeden der einen oder mehreren Föderiertes-Lernen-Clients (502, 602, 702, 1102),
Übertragen von Informationen über Merkmale der Trainingsdaten des Föderiertes-Lernen-Clients an den Föderiertes-Lernen-Server (501, 601, 701, 1101) und Bestimmen durch den Föderiertes-Lernen-Server, ob die Trainingsdaten des Föderiertes-Lernen-Clients das vorbestimmte Ähnlichkeitskriterium erfüllen oder
Übertragen (705) von Informationen über Merkmale der Testdaten des Föderiertes-Lernen-Servers an den Föderiertes-Lernen-Client und Bestimmen durch den Föderiertes-Lernen-Client, ob die Trainingsdaten des Föderiertes-Lernen-Clients das vorbestimmte Ähnlichkeitskriterium erfüllen.

4. Das Verfahren nach einem der Ansprüche 1 bis 3, wobei für jeden des einen oder der mehreren Föderiertes-Lernen-Clients (502, 602, 702, 1102) das vorbestimmte Ähnlichkeitskriterium darin besteht, dass jedes von einem oder mehreren Eigenschaften der Testdaten des Föderiertes-Lernen-Servers (501, 601, 701, 1101) innerhalb eines jeweiligen vorbestimmten Bereichs von entsprechenden Eigenschaften der Trainingsdaten des Föderiertes-Lernen-Clients liegt.

5. Das Verfahren nach Anspruch 4, wobei die Testdaten des Föderiertes-Lernen-Servers (501, 601, 701, 1101) und die Trainingsdaten des Föderiertes-Lernen-Clients (502, 602, 702, 1102) jeweils eine Mehrzahl von Datenelementen aufweisen, wobei jedes Datenelement einen Wert für jede einer Mehrzahl von Komponenten aufweist und die eine oder mehreren Eigenschaften der Testdaten des Föderiertes-Lernen-Servers einen Mittelwert, ein Quantil und/oder eine Varianz für jede von zumindest einigen der Komponenten der Datenelemente der Testdaten aufweisen, und die eine oder mehreren Eigenschaften der Trainingsdaten einen Mittelwert, ein Quantil und/oder eine Varianz für jede der zumindest einigen der Komponenten der Datenelemente der Trainingsdaten aufweisen.

6. Das Verfahren nach einem der Ansprüche 1 bis 5, aufweisend das Übertragen des maschinellen Lernmodells von dem Föderiertes-Lernen-Server (501, 601, 701, 1101) zu dem einen oder den mehreren Föderiertes-Lernen-Clients (502, 602, 702, 1102) und, zumindest wenn die Trainingsdaten des Föderiertes-Lernen-Clients das vorbestimmte Ähnlichkeitskriterium erfüllen, das Bestimmen der Aktualisierung durch jeden des einen oder der mehreren Föderiertes-Lernen-Clients.

7. Das Verfahren nach Anspruch 6, aufweisend das Bestimmen (706) einer aktualisierten Version des maschinellen Lernmodells für jeden des einen oder der mehreren Föderiertes-Lernen-Clients (502, 602, 702, 1102) gemäß der von dem Föderiertes-Lernen-Client bestimmten Aktualisierung, Vergleichen einer Genauigkeit der aktualisierten Version des maschinellen Lernmodells auf Testdaten des Föderiertes-Lernen-Clients mit einer Genauigkeit der ersten Version des maschinellen Lernmodells auf Testdaten des Föderiertes-Lernen-Servers (501, 601, 701, 1101) und
wenn die Genauigkeit der aktualisierten Version des maschinellen Lernmodells auf den Testdaten des Föderiertes-Lernen-Clients höher ist als die Genauigkeit der ersten Version des maschinellen Lernmodells auf Testdaten des Föderiertes-Lernen-Servers, Aktualisieren der ersten Version des maschinellen Lernmodells auf die zweite Version des maschinellen Lernmodells unter Verwendung der Aktualisierung durch den Föderiertes-Lernen-Client.

8. Das Verfahren nach Anspruch 7, das für jeden Föderiertes-Lernen-Client (502, 602, 702, 1102) das Übertragen einer Angabe der Genauigkeit der aktualisierten Version des maschinellen Lernmodells auf den Testdaten des Föderiertes-Lernen-Clients an den Föderiertes-Lernen-Server (501, 601, 701, 1101) und Vergleichen der Genauigkeit der aktualisierten Version des maschinellen Lernmodells auf den Testdaten des Föderiertes-Lernen-Clients mit der Genauigkeit der ersten Version des maschinellen Lernmodells auf Testdaten des Föderiertes-Lernen-Servers durch den Föderiertes-Lernen-Server aufweist oder
das Übertragen einer Angabe der Genauigkeit der ersten Version des maschinellen Lernmodells auf den Testdaten des Föderiertes-Lernen-Servers an den Föderiertes-Lernen-Client und Vergleichen der Genauigkeit der aktualisierten Version des maschinellen Lernmodells auf den Testdaten des Föderiertes-Lernen-Clients mit der Genauigkeit der ersten Version des maschinellen Lernmodells auf Testdaten des Föderiertes-Lernen-Servers durch den Föderiertes-Lernen-Client aufweist.

9. Das Verfahren nach einem der Ansprüche 7 bis 8, das für jeden der mehreren Clients (502, 602, 702, 1102), wenn (708) die Genauigkeit der aktualisierten Version des maschinellen Lernmodells auf den Testdaten des Föderiertes-Lernen-Clients höher ist als die Genauigkeit der ersten Version des maschinellen Lernmodells auf Testdaten des Föderiertes-Lernen-Servers (501, 601, 701, 1101), aber die Trainingsdaten des Föderiertes-Lernen-Clients das vorbestimmte Ähnlichkeitskriterium nicht erfüllen, das Auslösen (1203) einer Aktualisierung der Testdaten des Föderiertes-Lernen-Servers aufweist.

10. Das Verfahren nach einem der Ansprüche 7 bis 9, das für jeden der mehreren Clients (502, 602, 702, 1102) aufweist, dass, wenn (707) die Trainingsdaten des Föderiertes-Lernen-Clients das vorbestimmte Ähnlichkeitskriterium nicht erfüllen und die Genauigkeit der aktualisierten Version des maschinellen Lernmodells auf den Testdaten des Föderiertes-Lernen-Clients nicht höher ist als die Genauigkeit der ersten Version des maschinellen Lernmodells auf Testdaten des Föderiertes-Lernen-Servers (501, 601, 701, 1101), die Verwendung der vom Föderiertes-Lernen-Client erzeugten Aktualisierung zur Aktualisierung der ersten Version des maschinellen Lernmodells vermieden wird.

11. Das Verfahren nach einem der Ansprüche 7 bis 10, das für jeden des einen oder der mehreren Clients, wenn (707) die Trainingsdaten des Föderiertes-Lernen-Clients das vorgegebene Ähnlichkeitskriterium nicht erfüllen und die Genauigkeit der aktualisierten Version des maschinellen Lernmodells auf den Testdaten des Föderiertes-Lernen-Clients nicht höher ist als die Genauigkeit der ersten Version des maschinellen Lernmodells auf den Testdaten des Föderiertes-Lernen-Servers, das Auslösen (1203) einer Aktualisierung der Trainingsdaten des Föderiertes-Lernen-Clients aufweist.

12. Das Verfahren nach einem der Ansprüche 1 bis 11, das die Implementierung des einen oder der mehreren Föderiertes-Lernen-Clients durch ein oder mehrere mobile Endgeräte eines Mobilfunk-Kommunikationssystems oder die Implementierung sowohl des Föderiertes-Lernen-Servers als auch des einen oder der mehreren Föderiertes-Lernen-Clients durch Kernnetzfunktionen des Mobilfunk-Kommunikationssystems aufweist.

13. Das Verfahren nach einem der Ansprüche 1 bis 12, wobei jeder des einen oder der mehreren Föderiertes-Lernen-Clients die Aktualisierung durch Trainieren des maschinellen Lernmodells auf den Trainingsdaten des Föderiertes-Lernen-Clients erzeugt, um eine Kommunikationsnetzwerk-Analyseaufgabe durchzuführen.

14. Das Verfahren nach Anspruch 13, wobei die Kommunikationsnetzwerk-Analyseaufgabe eine Vorhersage des Bedarfs an Kommunikationsressourcen ist.

15. Ein Datenverarbeitungssystem, das so konfiguriert ist, dass es das Verfahren nach einem der Ansprüche 1 bis 14 durchführt.

## Revendications

1. Procédé (700, 1200) d'entraînement d'un modèle d'apprentissage automatique **caractérisé par** comprenant :
la détermination (1201), pour chacun d'un ou de plusieurs clients d'apprentissage fédéré (502, 602, 702, 1102), si des données d'entraînement du client d'apprentissage fédéré respectif remplissent un critère de similarité prédéterminé avec des données de test d'un serveur d'apprentissage fédéré (501, 601, 701, 1101), et
pour chacun des clients d'apprentissage fédéré, si (1202) les données d'entraînement du client d'apprentissage fédéré respectif remplissent le critère de similarité prédéterminé, la mise à jour d'une première version du modèle d'apprentissage automatique s'exécutant sur le serveur d'apprentissage fédéré vers une deuxième version du modèle d'apprentissage automatique en utilisant une mise à jour qui est générée en utilisant les données d'entraînement du client d'apprentissage fédéré respectif, par le client d'apprentissage fédéré respectif.

2. Procédé selon la revendication 1, comprenant la génération, par le serveur d'apprentissage fédéré (501, 601, 701, 1101), de la deuxième version du modèle d'apprentissage automatique en agrégeant les mises à jour de chacun dudit un ou desdits plusieurs clients d'apprentissage fédéré (502, 602, 702, 1102) pour lesquels les données de test du serveur d'apprentissage fédéré et les données d'entraînement du client d'apprentissage fédéré remplissent le critère de similarité prédéterminé.

3. Procédé selon la revendication 1 ou 2, comprenant, pour chacun dudit un ou desdits plusieurs clients d'apprentissage fédéré (502, 602, 702, 1102),
la transmission d'informations sur des caractéristiques des données d'entraînement du client d'apprentissage fédéré au serveur d'apprentissage fédéré (501, 601, 701, 1101) et la détermination, par le serveur d'apprentissage fédéré, si les données d'entraînement du client d'apprentissage fédéré remplissent le critère de similarité prédéterminé, ou
la transmission (705) d'informations sur des caractéristiques des données de test du serveur d'apprentissage fédéré au client d'apprentissage fédéré et la détermination, par le client d'apprentissage fédéré, si les données d'entraînement du client d'apprentissage fédéré remplissent le critère de similarité prédéterminé.

4. Procédé selon l'une quelconque des revendications 1 à 3, dans lequel, pour chacun dudit un ou desdits plusieurs clients d'apprentissage fédéré (502, 602, 702, 1102), le critère de similarité prédéterminé est que chacune d'une ou de plusieurs caractéristiques des données de test du serveur d'apprentissage fédéré (501, 601, 701, 1101) se situe dans une plage prédéterminée respective de caractéristiques correspondantes des données d'entraînement du client d'apprentissage fédéré.

5. Procédé selon la revendication 4, dans lequel les données de test du serveur d'apprentissage fédéré (501, 601, 701, 1101) et les données d'entraînement du client d'apprentissage fédéré (502, 602, 702, 1102) comprennent chacune une pluralité d'éléments de données, chaque élément de données ayant une valeur pour chacun d'une pluralité de composants et lesdites une ou plusieurs caractéristiques des données de test du serveur d'apprentissage fédéré comprennent une moyenne, un quantile et/ou une variance pour chacun d'au moins quelques-uns des composants des éléments de données des données de test et lesdites une ou plusieurs caractéristiques des données d'entraînement comprennent une moyenne, un quantile et/ou une variance pour chacun desdits au moins quelques-uns des composants des éléments de données des données d'entraînement.

6. Procédé selon l'une quelconque des revendications 1 à 5, comprenant la transmission du modèle d'apprentissage automatique du serveur d'apprentissage fédéré (501, 601, 701, 1101) auxdits un ou plusieurs clients d'apprentissage fédéré (502, 602, 702, 1102) et, au moins si les données d'entraînement du client d'apprentissage fédéré remplissent le critère de similarité prédéterminé, la détermination, par chacun desdits un ou plusieurs clients d'apprentissage fédéré, de la mise à jour.

7. Procédé selon la revendication 6, comprenant la détermination (706), par chacun desdits un ou plusieurs clients d'apprentissage fédéré (502, 602, 702, 1102), d'une version mise à jour du modèle d'apprentissage automatique selon la mise à jour déterminée par le client d'apprentissage fédéré, la comparaison d'une précision de la version mise à jour du modèle d'apprentissage automatique sur des données de test du client d'apprentissage fédéré avec une précision de la première version du modèle d'apprentissage automatique sur des données de test du serveur d'apprentissage fédéré (501, 601, 701, 1101) et si la précision de la version mise à jour du modèle d'apprentissage automatique sur les données de test du client d'apprentissage fédéré est supérieure à la précision de la première version du modèle d'apprentissage automatique sur des données de test du serveur d'apprentissage fédéré, la mise à jour de la première version du modèle d'apprentissage automatique vers la deuxième version du modèle d'apprentissage automatique en utilisant la mise à jour par le client d'apprentissage fédéré.

8. Procédé selon la revendication 7, comprenant, pour chaque client d'apprentissage fédéré (502, 602, 702, 1102), la transmission d'une indication de la précision de la version mise à jour du modèle d'apprentissage automatique sur les données de test du client d'apprentissage fédéré au serveur d'apprentissage fédéré (501, 601, 701, 1101) et la comparaison, par le serveur d'apprentissage fédéré, de la précision de la version mise à jour du modèle d'apprentissage automatique sur les données de test du client d'apprentissage fédéré avec la précision de la première version du modèle d'apprentissage automatique sur des données de test du serveur d'apprentissage fédéré ou
la transmission au client d'apprentissage fédéré d'une indication de la précision de la première version du modèle d'apprentissage automatique sur les données de test du serveur d'apprentissage fédéré et la comparaison, par le client d'apprentissage fédéré, de la précision de la version mise à jour du modèle d'apprentissage automatique sur les données de test du client d'apprentissage fédéré avec la précision de la première version du modèle d'apprentissage automatique sur des données de test du serveur d'apprentissage fédéré.

9. Procédé selon l'une quelconque des revendications 7 à 8, comprenant, pour chacun de la pluralité de clients (502, 602, 702, 1102), si (708) la précision de la version mise à jour du modèle d'apprentissage automatique sur les données de test du client d'apprentissage fédéré est supérieure à la précision de la première version du modèle d'apprentissage automatique sur les données de test du serveur d'apprentissage fédéré (501, 601, 701, 1101), mais les données d'apprentissage du client d'apprentissage fédéré ne remplissent pas le critère de similarité prédéterminé, le déclenchement (1203) d'une mise à jour des données de test du serveur d'apprentissage fédéré.

10. Procédé selon l'une quelconque des revendications 7 à 9, comprenant, pour chacun de la pluralité de clients(502, 602, 702, 1102), si (707) les données d'entraînement du client d'apprentissage fédéré ne remplissent pas le critère de similarité prédéterminé et que la précision de la version mise à jour du modèle d'apprentissage automatique sur les données de test du client d'apprentissage fédéré n'est pas supérieure à la précision de la première version du modèle d'apprentissage automatique sur des données de test du serveur d'apprentissage fédéré (501, 601, 701, 1101), l'évitement de l'utilisation de la mise à jour générée par le client d'apprentissage fédéré pour la mise à jour de la première version du modèle d'apprentissage automatique.

11. Procédé selon l'une quelconque des revendications 7 à 10, comprenant, pour chacun desdits un ou plusieurs clients, si (707) les données d'entraînement du client d'apprentissage fédéré ne remplissent pas le critère de similarité prédéterminé et que la précision de la version mise à jour du modèle d'apprentissage automatique sur les données de test du client d'apprentissage fédéré n'est pas supérieure à la précision de la première version du modèle d'apprentissage automatique sur des données de test du serveur d'apprentissage fédéré, le déclenchement (1203) d'une mise à jour des données d'entraînement du client d'apprentissage fédéré.

12. Procédé selon l'une quelconque des revendications 1 à 11, comprenant la mise en œuvre desdits un ou plusieurs clients d'apprentissage fédéré par un ou plusieurs terminaux mobiles d'un système de radiocommunication mobile ou la mise en œuvre à la fois du serveur d'apprentissage fédéré et desdits un ou plusieurs clients d'apprentissage fédéré par des fonctions de cœur de réseau du système de radiocommunication mobile.

13. Procédé selon l'une quelconque des revendications 1 à 12, dans lequel chacun desdits un ou plusieurs clients d'apprentissage fédéré génère la mise à jour en entraînant le modèle d'apprentissage automatique sur les données d'entraînement du client d'apprentissage fédéré pour effectuer une tâche d'analyse de réseau de communication.

14. Procédé selon la revendication 13, dans lequel la tâche d'analyse de réseau de communication est une prédiction d'un besoin de ressources de communication.

15. Système de traitement de données, configuré pour exécuter le procédé de l'une quelconque des revendications 1 à 14.
